# EUROPEAN PATENT SPECIFICATION

(11) **EP 1 296 072 B1**
(45) Date of publication and mention of the grant of the patent: **09.08.2006**
(21) Application number: 02021382.3
(22) Date of filing: 24.09.2002
(51) Int. Cl.: F16C 1/22

(54) **Adjusting mechanism for length adjustment**
Einstellmechanismus zur Längeneinstellung
Mécanisme de réglage de la longueur

(30) Priority: 24.09.2001 DE 10146930
(43) Date of publication of application: 26.03.2003
(73) Proprietor: FICO CABLES LDA, 4471 Maia (PT)
(72) Inventor: Pereira Monteiro, José, 4470-263 Vermoin - Maia (PT)
(74) Representative: Hess, Peter K. G.

(56) References cited:
- EP-A- 0 365 242
- EP-A- 0 658 696
- EP-A- 0 861 988
- DE-A- 4 010 992
- US-A- 5 222 411

## Description

### 1.Field of the Invention

The present invention relates to an adjusting mechanism for length adjustment, particularly for cables, which enables simple and safe length adjustment for cables to the device to be actuated.

### 2. Prior Art

Cables of every kind as for example Bowden cables are used among other things in motor vehicles, machines and bicycles. They generally serve for the connection between an actuating device as for example a pedal or a lever, and an apparatus to be actuated as for instance a parking brake. The length of said cable between the actuating device and the apparatus to be actuated has to be correctly adapted to guarantee a trouble-free operation for example of the above mentioned parking brake.

Often, it is the case that cables show a certain lost motion. That means that said cable is a bit too long. Thus, the movement of the actuating device is firstly used for the stressing of the cable to be transmitted afterwards to the apparatus to be actuated. This lost motion means for example an unneeded lost of time when for example a brake has to be immediately actuated.

Known adjusting mechanisms for the length of cables or Bowden cables comprise a mechanism by means of which the length of the respective cable can be adapted. Such a mechanism, for instance for Bowden cables, includes a threaded bush, in which the sheath of the Bowden cable is supported. This threaded bush is mounted at a part via a thread to which the cable of the Bowden cable is linked. By screwing in or screwing out of said bush, it is possible to adjust the position of the sheath to adapt in this manner the length of the Bowden cable to the respective device. As follows from above, the adjusting mechanism is installed at the end of the cable for simple adjustment and easy accessibility, i. e. either at the actuating device or at the apparatus to be actuated.

A further adjusting mechanism for length adjustment of a cable comprises for example a clamping mechanism to fix a cable. This clamping mechanism can for instance be opened or closed by means of screws or linked clamps so that the cable is displaceable in the clamping mechanism. For adjusting the length of the cable, the cable is respectively positioned in the clamping mechanism and successively the mechanism is closed. In case of re-adjusting the cable or of correcting the length of the cable, it is accordingly necessary to again open the clamping mechanism and to repeat the adjusting procedure. Based on the steps to be repeated, this operation is correspondingly cost and time consuming. Additionally, it requires additional maintenance work to prevent corrosion of the adjusting means of the clamping mechanism as for example screws.

Document EP 0 658 696 shows an adjusting mechanism for the length adjustment of a cable comprising a casing, a cylindrical support arranged movably inside of said casing, and a separate toothed ring. By moving the cylindrical support relative to the casing, a length adjustment of a cable can be accomplished. To secure the relative positions of support and casing, the separate toothed ring is assembled on the casing, clasping or clamping the casing, and engaging the cylindrical support inside of said casing, through windows or holes provided in the wall of the casing. This adjusting mechanism is relatively difficult to operate under cramped conditions, and the separate ring can easily be lost.

In conjunction with cables and their connection, also different connecting assemblies are known besides the above-mentioned adjusting mechanisms. These are disclosed for instance in US-A-5 655 415 and WO 98/48185. The connecting assemblies serve for connecting cables to bridge longer distances with several cables. Said connecting assemblies include adjusting facilities by which the sheath cable relation of Bowden cables can be adjusted. However, these adjusting facilities are not designed to be installed at the end of a cable. Furthermore, for example supporting facilities are missing for the end of the cable to guarantee and appropriate operation.

A disadvantage of the above adjusting facility is the effect that, if positioned at places difficult of access, the adjusting procedure is additionally complicated since several working steps are necessary to be executed by tools.

It is therefore the problem of the present invention to provide an adjusting mechanism for length adjustment of cables which can be connected to an actuating device or an apparatus to be actuated for easy adjustment and which enables safe and comfortable adjustment of the length of cables compared to the prior art.

### 3.Summary of the invention

The above problem of the present invention is solved by an adjusting mechanism for length adjustment of cables comprising the features of claim 1. The adjusting mechanism according to the invention comprises a cylindrical housing, an adjusting member displaceably arranged within the cylindrical housing and biased against the cylindrical housing which cooperates with an end or the sheath of the cable wherein the position of the adjusting member with respect to the cylindrical housing is adjustable to adapt the length of the cable.

The functionality of the adjusting mechanism of the present invention is based on the specific positioning of the adjusting member with respect to the cylindrical housing. During this action, the adjusting member is displaced within the cylindrical housing whereby the present adjusting mechanism can be adapted to the respective length of the cable. The cylindrical housing supports itself at a fixed point and it is stationary with respect to the adjusting member. Such a fixed point is for example provided by vehicle chassis, the sheath of a Bowden cable or a lever at a device to be actuated. Furthermore, a space-saving adjusting mechanism is provided by assembling said adjusting member within the cylindrical housing. Furthermore, the parts lying within the housing are protected against outer impact. These impacts include for instance contamination or mechanical loading. Based on this assembly according to the invention, it is guaranteed that the length of the cable can be adjusted via the support of its end in the adjusting member. A position variation of the end of the cable by the adjusting mechanism according to the invention provides an effective and comfortable adjusting possibility. The adjusting mechanism can easily be latched with one hand only, by pressing two actuating means to each other.

According to a preferred embodiment, said adjusting mechanism is arranged near or at the end or the sheath of the cable.

Due to the arrangement of the adjusting mechanism at the end of the cable according to the invention, the length adjustment of the cable is carried out near the device to be operated or near the operating mechanism to be easily and comfortably accessible. Further, the adjusting mechanism can be used for connecting the cable with the actuating device or with the apparatus to be actuated.

In a preferred embodiment of the adjusting mechanism of the present invention, the adjusting member is configured cylindrically and its outer surface comprises first latching means to prevent a movement of said adjusting member within said cylindrical housing. Furthermore, said cylindrical adjusting member is arranged in concentric relation to the cylindrical housing.

By the cylindrical formation of the housing and the adjusting member according to the invention, it is possible to provide the whole adjusting mechanism in a small and space-saving configuration. In this manner, it only represents an inessential elongation of the cable to be adjusted or it is conformed to the end-course of the cable. To suitably position the adjusting member in the cylindrical housing, first latching means are situated at the outer surface of the adjusting member. By means of these first latching means, the desired position of the adjusting member can be arrested whereby a safe operation with suitable length adjustment of the cable is guaranteed.

According to a further preferred embodiment of the present invention, the adjusting member of the adjusting mechanism comprises a receiving portion for a cable and a supporting portion for a spring wherein said spring is biased between said adjusting member and said cylindrical housing.

The receiving portion for the cable serves for safe mounting of the cable in the adjusting mechanism. This mounting can be achieved in a different manner. For example, the cable can comprise an enlargement at its end wherein the cable passes through a co-axial opening in the adjusting member which is to small for the following enlargement at the end of the cable. In this manner, the end of the cable can be supported in the adjusting mechanism. Receiving portions are also conceivable, which comprise a groove for a cable and which fix the end of the cable or a middle part of the cable by means of clamps or other mechanical fixing devices. For facilitating the adjustment of the cable by means of the adjusting mechanism, a spring is biased between the adjusting member and the housing. This spring is received in a supporting portion at the adjusting member which is constructively adapted. In case of a non-arrested adjusting member, the spring presses the adjusting member with the cable in the direction which contributes to the stressing of the cable and thereby to the adaptation of the length of the cable. Thus, a comfortable length adjustment of the cable is carried out according to the invention.

According to a further preferred embodiment of the present invention, the cylindrical housing of the adjusting mechanism comprises end latching means which cooperate with a first latching means of the adjusting member to fix the position of the adjusting member within the cylindrical housing. The second latching means also preferably comprise actuating means by which they are actuated.

In order to adjust the length of the cable by means of the adjusting mechanism, the adjusting member has to be arrested after suitable positioning within the cylindrical housing. This arresting takes place by the engagement of the second latching means of the cylindrical housing with the first latching means of the adjusting member. The first and second latching means are complementary shaped and prevent a displacement against each other. Via the actuating means, the second latching means are engaged with said first latching means or released therefrom. Said actuating means can be either manually or motively actuated or by means of other devices.

According to a further preferred embodiment of the present invention, the cylindrical housing of the adjusting mechanism comprises a projection for supporting the spring and a linking portion for arranging the adjusting mechanism at a point of reference.

In order to suitably bias the spring between the cylindrical housing and the adjusting member, the spring has to be supported at an adapted projection. This projection is configured corresponding to the shape of the spring. Thus, projections are conceivable which can receive for example a coil spring or other spring constructions based on their shape. The above-mentioned linking portion, which is positioned at the outer end of the cylindrical housing, serves for the connection of the adjusting mechanism with for example a casing box or with the sheath of a Bowden cable. By this linking portion, support is guaranteed against which the length of the cable can be adjusted.

According to a further preferred embodiment of the present invention, the adjusting member comprises a first arrest means which cooperates with the second arrest means mounted on the cylindrical housing for fixing the position of the actuating means.

According to a preferred embodiment of the present invention, the actuating means are manually actuated. To prevent an unwanted releasing of the engagement of the first and the second latching means, the actuating means is locked by means of a first and a second arrest means in its position. The arrest means can be shaped for example as barbs which engage each other. It is also conceivable that the latching is achieved by means of magnetic or electro-magnetic means.

According to a further preferred embodiment of the present invention, the actuating means consists of three main parts, only. These parts are the cylindrical housing, the adjusting member and the spring. Preferrably, the second latching means and/or the actuating means and/or first and second arresting means are integrally formed with the cylindrical housing. Therefore, the adjusting mechanism is easy to manufacture and to assemble.

### 4. Short description of the drawing

The present invention and its preferred embodiments are explained in detail under reference to the accompanying drawing and by means of the detailed description. The accompanying drawings show:
- Fig. 1: a general view of the adjusting mechanisms according to the invention, partially in a sectional view;
- Fig. 2: the adjusting mechanism according to the invention with not-installed cables;
- Fig. 3: the adjusting mechanism according to the invention with a completely compressed inner spring; and
- Fig. 4: the adjusting mechanism according to the invention with a locked adjusting member wherein its position is adapted to the length of the cable.

### 5. Detailed description of the invention

The present invention relates to an adjusting mechanism 1 for length adjustment of a cable 30 which is arranged at the end 32 of the cable 30. A variety of applications of cables 30 can be found in a motor vehicle where they are used for example for the actuation of brakes, mirrors or other devices. For this reason, the one end of the respective cable 30 is connected to an actuating member and the other end of the cable 30 is mounted on a device to be actuated. In such an assembly, it requires great efforts to exactly adjust the length of the cable 30 to the distance between the device to be operated and the actuating device. Because of this reason, a lost motion of the cable 30 follows very often from the length of the cable which is to big and, thus, limits the operation of the respective device.

By means of the adjusting mechanism of the present invention, the length of the cable 30 is adjusted with low efforts and in a comfortable manner so that an optimal operation of the connected device is enabled.

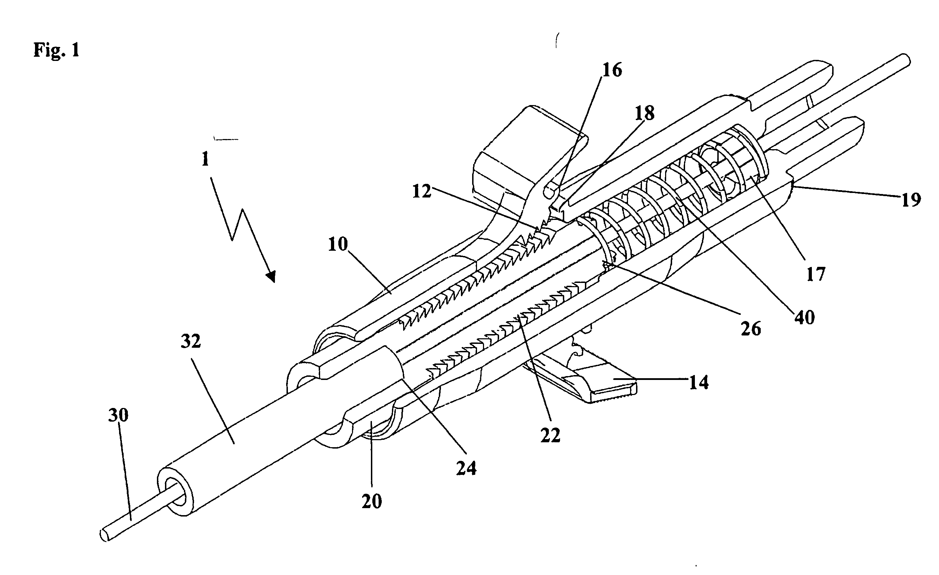

With reference to Fig. 1, a preferred embodiment of the adjusting mechanism 1 of the present invention is described. Fig. 1 shows an adjusting mechanism 1 according to the invention, partly depicted in sectional view wherein a cable 30 is already installed in the adjusting mechanism 1. According to a preferred embodiment of the present invention, the adjusting mechanism 1 comprises a cylindrical housing 10, an adjusting member 20, and a spring 40 wherein the cylindrical housing 10 and the adjusting member 20 support at each other via said biased spring 40.

The cylindrical housing 10 as well as the adjusting member 20 are preferably according to the invention made of plastic. The use of plastic parts leads on the one hand to a weight reduction with the same mechanical stability in comparison with the use of metals and on the other hand, plastics are less susceptible to corrosion following from the impact of humidity and other chemicals. But it is also conceivable to make the cylindrical housing 10 and adjusting member 20 of metal or materials.

As shown in Fig. 1, the cylindrical housing 10 serves for accommodating the adjusting member 20 and the spring 40. The spring 40 is, according to a preferred embodiment, configured like a coil spring, and it is supported at a projection or supporting portion 26 of the adjusting member 20 and at a projection 17 of the cylindrical housing 10. The adjusting mechanism 1 also fulfils its function if the spring 40 is configured in another shape or arranged at another place. In this connection, it is essential that the spring 40 supports the cylindrical housing 10 and the adjusting member 20 against each other in a biased condition. Thus, for example the spring 40 could be also integrated in the wall of the cylindrical housing 10.

According to a preferred embodiment of the present invention, the adjusting member 20 is also cylindrically configured and comprises at its outside a plurality of first latching means 22 wherein the outside is opposed to the inner wall of the cylindrical housing 10. In circumference, the adjusting member 20 is such dimensioned that it can be displaceably accommodated by the cylindrical housing 10. It follows therefrom for the described preferred embodiment of the invention that the cylindrical housing 10, the adjusting member 20, and the spring 40 are concentrically arranged to the cable 30. The cylindrical housing 10 is as long as to completely contain the spring 40 as well as the adjusting member 20, in case the spring 40 is in compressed condition. The adjusting member 20 can also have a polygonal or arbitrary cross-sectional shape in so far as this enables that the adjusting member 20 is sufficiently guided and latched within the cylindrical housing 10.

In order to latch the adjusting member according to a preferred embodiment of the present invention within the cylindrical housing 10, said cylindrical housing 10 comprises second latching means 12 which engage within the inner of the cylindrical housing 10. The second latching means 12 are integrally formed with the cylindrical housing 10 and connected to it via a resilient spring area. The second latching means 12 are preferably according to the present invention complementary shaped to the first latching means 22 at the outside of the adjusting member 20. For the complementary shaped first and second latching means 12 and 22, triangular, quadrangular, or also barb-like configurations are conceivable to give only a few examples. The latching means serve for assuring the position of the adjusting member 20 within the cylindrical housing 10. Correspondingly, it can be guaranteed by the shape of the first and second latching means 12 and 22 that said adjusting member 20 is also displaceable in one direction without releasing the first and second latching means 12 and 22. Accordingly, a displacement in both directions can also be prevented.

In order to assure the position of the adjusting member 20, the second latching means 12 comprise actuating means 14. According to a preferred embodiment of the present invention, said actuating means 14 have the shape of push areas which are manually actuated. Via these push areas, said second latching means 12 are pressed in the direction of the adjusting member 20 and they lock into place in a certain end position in which they assure the position of the adjusting member 20 within the cylindrical housing 10. The end position itself and the retaining in this end position is enables by a first 16 and a second arrest means 18. The first arrest means 16 is situated at the actuating means 14 and the second arrest means 18 is positioned at the outside of the cylindrical housing 10. The arrest means 16, 18 have the shape of a barb and projection according to the preferred embodiment of the present invention, which enable a latching of each other. It is also conceivable that the latching is achieved for example by magnetic devices or by electromechanical systems. The same applies for the actuating means 14 which can be also driven by motive systems.

Fig. 1 shows, that second latching means 12, actuating means 14 with the push areas and the first and second arrest means 16, 18 are integrally formed with the housing 10. Preferably they are integrally formed of a plastic material.

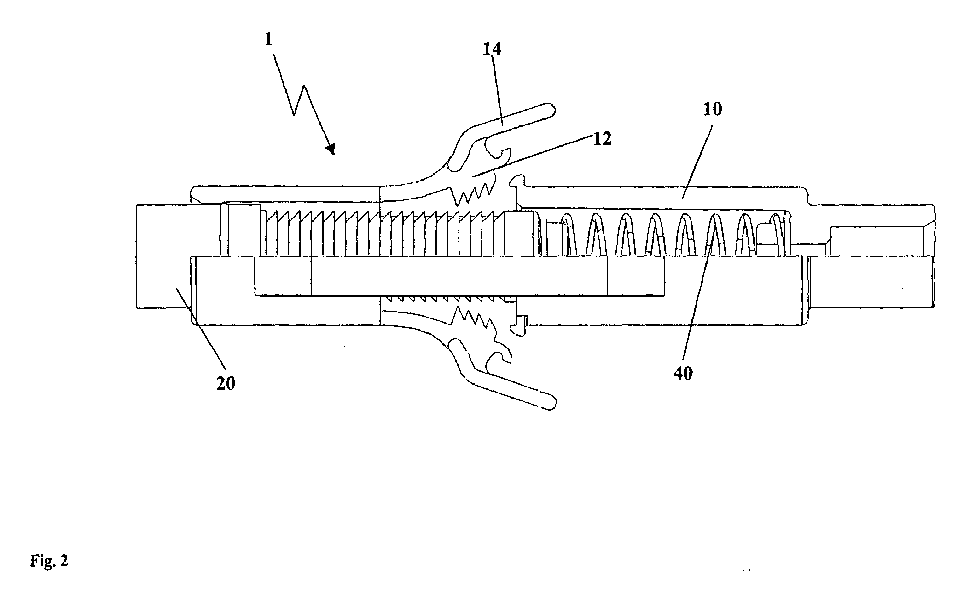

Fig. 2 shows, that the that second latching means 12, actuating means 14 and the first arrest means 16 are connected to the housing 10 by an outwardly biased spring area. In the unlatched state of the adjustment mechanism 1 this spring area is bent outwardly, so that the first 22 and second latching means 12 do not engage each other.

Opposite to the supporting portion 26 of the adjusting member 20, a receiving portion 24 for the end or the sheath 32 of the cable 30 is situated. The receiving portion 24 is preferably complementary shaped to the end or the sheath 32 of the cable 30. Based on this configuration, additional mechanical mounting means can be surrendered. It is also possible to mount cables 30 without a respective end portion at the adjusting member 20, for example by means of screws or the same. Based on the tensile loading of the cable 30 in direction of the spring 40 and against the pre-stress of the spring 40, the end or the sheath 32 of the cable 30 is pressed into the receiving portion 24 of the adjusting member 20 and at the same time it is held in its position. At the end of the cylindrical housing 10 opposite to the end 32 of the cable 30, a linking portion 19 is positioned for arranging the adjusting mechanism 1 at a point of reference provided therefor. Such a point of reference which is a fixed point with respect to the moveable cable 30, is for instance given by the end of the sheath of a Bowden cable. But it is also possible to mount the adjusting mechanism 1 in said linking portion 19 at a fixed point for example in a casing box or at a lever of a device to be actuated. In this manner, the displacement of the cable 30 is carried out against the support in this linking portion 19.

In view of the above described preferred embodiment of the present invention, it is also conceivable to mount the cable 30 at the cylindrical housing 10. Then the adjusting member 20 could serve for mounting the adjusting mechanism 1 at a chasing box or at a similar location to enable a length adjustment and a corresponding support. It follows from the description for a skilled person that the functions to be executed by the cylindrical housing 10 and the adjusting member 20 can be carried out by the one or the other component. The essential condition therefor consists in the fact that the configuration of the respective components corresponds to the respective functions to be executed and that the relative movement between the components is guaranteed.

With reference to Figs. 2 to 4, the operation of the adjusting mechanism according to the invention is explained. Fig. 2 shows the adjusting mechanism 1 partly in a sectional view at the time at which the cable 30 (not shown) is not yet installed in the adjusting mechanism 1. Because of this reason, the spring 40 is still in a completely unstressed condition. Furthermore, the actuating means 14 with the associated second latching means 12 are not arrested and a free movement of the adjusting member 20 within the cylindrical housing 10 is possible.

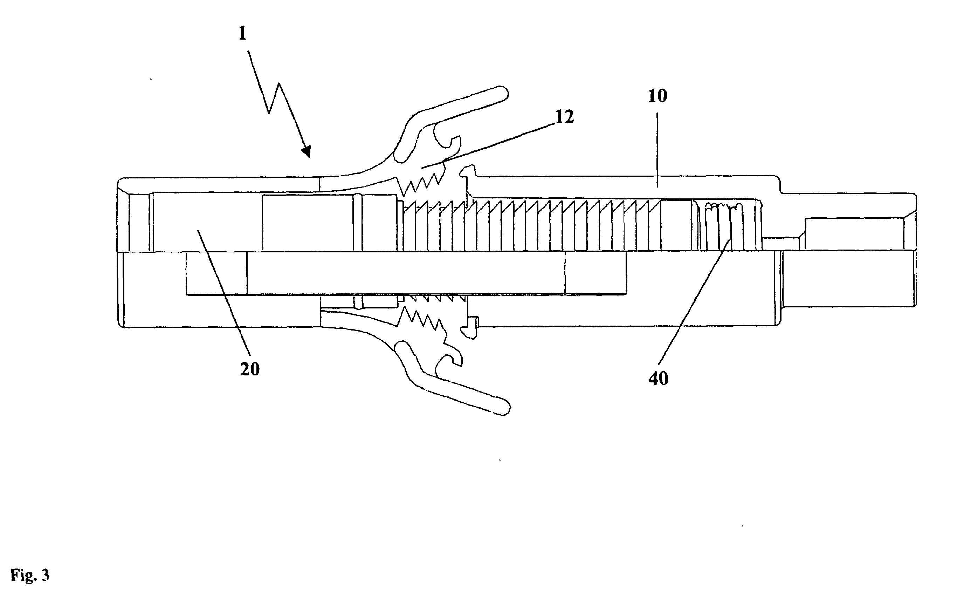

Referring to Fig. 3, now the cable 30 (not shown) is installed in the adjusting mechanism 1 and the adjusting mechanism 1 is completely compressed as can be seen by means of the compressed spring 40. In this condition, for example the other end of the cable 30 (not shown) is mounted at the device to be actuated. In this manner, an adjustment of the length of the cable 30 is facilitated wherein later expansions of the cable 30 can be compensated by means of the adjusting mechanism 1. Also in this condition, the actuating means 14 with the associated second latching means 12 are not yet arrested because a certain length strain of the cable 30 is still possible after mounting of the other end of the cable 30 at the device to be actuated.

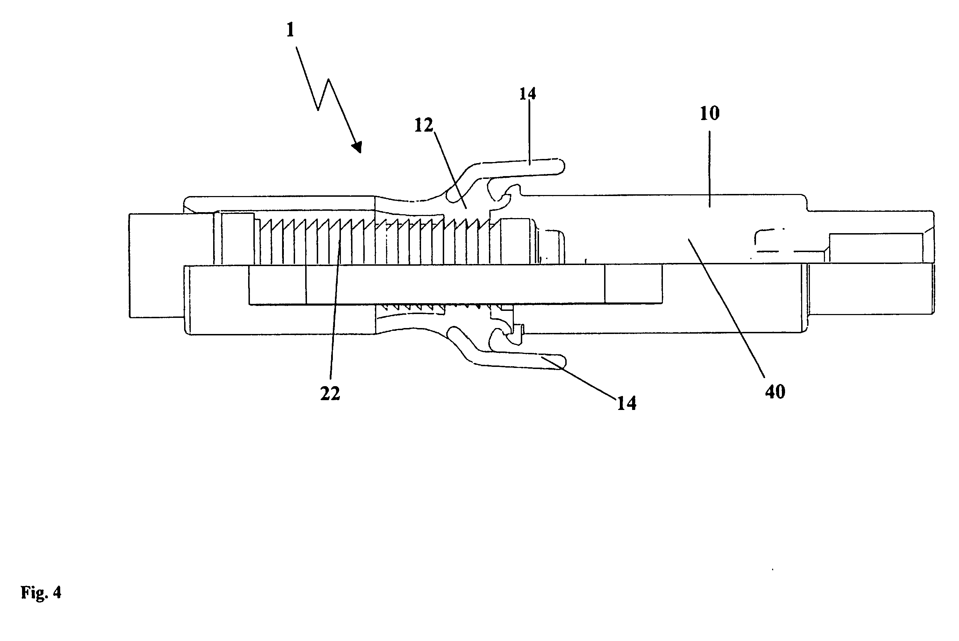

Fig. 4 shows the adjusting mechanism 1 according to a preferred embodiment of the invention in a condition in which the length of the cable 30 was optimally adapted by means of the adjusting mechanism 1. In case of a present lost motion of the cable 30 which has to be compensated for an optimal actuation of the device to be actuated, at first the second latching means 12 are released from the engagement with the first latching means 22 by means of the actuating means 14.

The spring 40 which is at this moment in a compressed state (compare Fig. 3), expands and presses the adjusting member 20 in the direction of the end or the sheath 32 of the cable 30 (not shown). In this manner, a lost motion of the cable 30 is compensated and the cable 30 is stressed. In case no further displacement of the adjusting member 20 within the cylindrical housing 10 results from the effect of the spring 40, the second actuating means 12 of the cylindrical housing 10 are engaged with the first latching means 22 of the adjusting member 20 by means of the actuating means 14 and subsequently the actuating means 14 are latched. In this manner, the position of the adjusting member 20 within the cylindrical housing 10 is assured and thereby the operation of the cable 30 is guaranteed with an optimally adjusted length.

### List of Reference Signs

- 1: adjusting mechanism
- 10: cylindrical housing
- 12: second latching means
- 14: actuating means
- 16: first arrest means
- 17: projection
- 18: second arrest means
- 19: linking portion
- 20: adjusting member
- 22: first latching means
- 24: receiving portion
- 26: supporting portion
- 30: cable
- 32: cable sheath
- 40: spring

## Claims

1. Adjusting mechanism (1) for the length adjustment of cables (30) comprising:
**a.** a cylindrical housing (10),
**b.** an adjusting member (20), which is displaceably arranged within the cylindrical housing (10) and which is biased against said cylindrical housing (10) and which cooperates with an end or a sheath (32) of said cable (30), wherein
**c.** the position of the adjusting member (20) can be adjusted in relation to said cylindrical housing (10) to adapt the length of the cable (30) or the sheath (32), **characterized in that**
d. the housing (10) comprises second latching means (12), which are complementary shaped to first latching means (22) at the outside of the adjusting member (20), and
e. the second latching means (12) are integrally formed with the cylindrical housing (10) and connected to it via a resilient spring area, and
f. the second latching means (12) comprise actuating means (14), which can be manually pushed in direction of the adjusting member (20) in order to lock the second latching means (12) in a certain end position.

2. Adjusting mechanism (1) according to claim 1, wherein said adjusting mechanism (1) is arranged at said end of said cable (30).

3. The adjusting mechanism (1) according to claim 1 or 2, wherein the adjusting member (20) is cylindrically configured and comprises first latching means (22) at its outside for preventing a movement of said adjusting member (20) within said cylindrical housing (10).

4. The adjusting mechanism (1) according to claim 3, wherein the adjusting member (20) is arranged concentrically to and within the cylindrical housing (10).

5. The adjusting mechanism (1) according to claim 4, wherein the adjusting member (20) comprises a receiving portion (24) for the end (32) of the cable (30) and a support portion (26) for said spring (40).

6. The adjusting mechanism (1) according to claim 5, wherein said spring (40) is biased between said adjusting member (20) and said cylindrical housing (10).

7. The adjusting mechanism (1) according to claim 6, wherein said cylindrical housing (10) comprise a projection (17) for supporting said spring (40) and a linking portion (19) for arranging said adjusting mechanism (1) at a point of reference.

8. The adjusting mechanism (1) according to claim 6 or 7, wherein the actuating means (14) comprise a first arrest means (16) which cooperates with a second arrest means (18) arranged at said cylindrical housing (10) for fixing said actuating member (14) at its position.

9. The adjusting mechanism (1) according to claim 8, wherein the actuating means (14) and/or the first and the second arresting means (16, 18) are integrally formed with the cylindrical housing (10).

## Patentansprüche

1. Einstellmechanismus (1) zur Längeneinstellung von Seilzügen (30) aufweisend:
a. ein zylinderförmiges Gehäuse (10);
b. ein Verstellglied (20), das innerhalb des zylinderförmigen Gehäuses (10) verschiebbar angeordnet und gegen das zylinderförmige Gehäuse (10) vorgespannt ist und das mit einem Ende oder einer Hülle (32) des Seilzuges (30) zusammenwirkt, wobei
c. die Position des Verstellgliedes (20) im Verhältnis zu dem zylinderförmigen Gehäuse (10) einstellbar ist, um die Länge des Seilzuges (30) oder der Hülle (32) anzupassen, **dadurch gekennzeichnet, dass**
d. das Gehäuse (10) zweite Verriegelungsmittel (12) aufweist, die komplementär zu ersten Verriegelungsmitteln (22) an der Außenseite des Verstellgliedes (20) geformt sind, und
e. die zweiten Verriegelungsmittel integral mit dem zylinderförmigen Gehäuse (10) ausgebildet sind, und mit diesem mittels eines flexiblen Federbereichs verbunden sind, und
f. die zweiten Verriegelungsmittel (12) Betätigungsmittel (14) aufweisen, die manuell in Richtung des Verstellgliedes (20) gedrückt werden können, um die zweiten Verriegelungsmittel (12) in einer bestimmten Endposition zu verriegeln.

2. Der Einstellmechanismus gemäß Anspruch 1, wobei der Einstellmechanismus (1) am Ende (32) des Seilzuges (30) angeordnet ist.

3. Der Einstellmechanismus (1) gemäß Anspruch 1 oder 2, wobei das Verstellglied (20) zylinderförmig ausgebildet ist und an seiner Außenseite erste Verriegelungsmittel (22) aufweist, um eine Bewegung des Verstellgliedes (20) innerhalb des zylinderförmigen Gehäuses (10) zu verhindern.

4. Der Einstellmechanismus (1) gemäß Anspruch 3, wobei das Verstellglied (20) konzentrisch zu und innerhalb des zylinderförmigen Gehäuses (10) angeordnet ist.

5. Der Einstellmechanismus (1) gemäß Anspruch 4, wobei das Verstellglied (20) einen Aufnahmebereich (24) für das Ende (32) des Seilzuges (30) und einen Abstützbereich (26) für die Feder (40) aufweist.

6. Der Einstellmechanismus (1) gemäß Anspruch 5, wobei die Feder (40) zwischen dem Verstellglied (20) und dem zylinderförmigen Gehäuse (10) vorgespannt ist.

7. Der Einstellmechanismus (1) gemäß Anspruch 6, wobei das zylinderförmige Gehäuse (10) einen Vorsprung (17) zum Abstützen der Feder (40) und einen Verbindungsbereich (19) zum Anordnen des Einstellmechanismus (1) an einem Bezugspunkt aufweist.

8. Der Einstellmechanismus (1) gemäß Anspruch 6 oder 7, wobei das Betätigungsmittel (14) ein erstes Arretiermittel (16) aufweist, das mit einem zweiten Arretiermittel (18) zusammenwirkt, das an dem zylinderförmigen Gehäuse (10) angeordnet ist, um das Betätigungsmittel (14) in seiner Position zu fixieren.

9. Der Einstellmechanismus (1) gemäß Anspruch 8, wobei das Betätigungsmittel (14) und/oder das erste und zweite Arretierungsmittel (16, 18) integral mit dem zylinderförmigen Gehäuse (10) ausgebildet sind.

## Revendications

1. Mécanisme de réglage (1) pour le réglage de longueur de câbles (30), comprenant :
a. un boîtier cylindrique (10),
b. un élément de réglage (20), qui est disposé de manière déplaçable dans le boîtier cylindrique (10), qui est sollicité contre ledit boîtier cylindrique (10) et qui coopère avec une extrémité ou une gaine (32) dudit câble (30), dans lequel
c. la position de l'élément de réglage (20) peut être réglée par rapport audit boîtier cylindrique (10) pour adapter la longueur du câble (30) ou de la gaine (32), **caractérisé en ce que**
d. le boîtier (10) comprend des seconds moyens de verrouillage (12), qui présentent une forme complémentaire par rapport à des premiers moyens de verrouillage (22) sur l'extérieur de l'élément de réglage (20), et
e. les seconds moyens de verrouillage (12) sont formés d'un seul tenant avec le boîtier cylindrique (10) et raccordés à ce'ui-ci par le biais d'une zone à ressort élastique, et
f. les seconds moyens de verrouillage (12) comprennent des moyens d'actionnement (14), qui peuvent être poussés manuellement en direction de l'élément de réglage (20) pour verrouiller les seconds moyens de verrouillage (12) dans une certaine position d'extrémité.

2. Mécanisme de réglage (1) selon la revendication 1, dans lequel ledit mécanisme de réglage (1) est disposé à ladite extrémité dudit câble (30).

3. Mécanisme de réglage (1) selon la revendication 1 ou 2, dans lequel l'élément de réglage (20) est configuré de manière cylindrique et comprend des premiers moyens de verrouillage (22) sur son extérieur pour empêcher tout déplacement dudit élément de réglage (20) dans ledit boîtier cylindrique (10).

4. Mécanisme de réglage (1) selon la revendication 3, dans lequel l'élément de réglage (20) est disposé concentriquement par rapport au boîtier cylindrique (10) et à l'intérieur de celui-ci.

5. Mécanisme de réglage (1) selon la revendication 4, dans lequel l'élément de réglage (20) comprend une partie de réception (24) pour l'extrémité (32) du câble (30) et une partie de support (26) pour ledit ressort (40).

6. Mécanisme de réglage (1) selon la revendication 5, dans lequel ledit ressort (40) est sollicité entre ledit élément de réglage (20) et ledit boîtier cylindrique (10).

7. Mécanisme de réglage (1) selon la revendication 6, dans lequel ledit boîtier cylindrique (10) comprend une saillie (17) pour supporter ledit ressort (40) et une partie de liaison (19) pour disposer ledit mécanisme de réglage (1) à un point de référence.

8. Mécanisme de réglage (1) selon la revendication 6 ou 7, dans lequel les moyens d'actionnement (14) comprennent un premier moyen d'arrêt (16) qui coopère avec un second moyen d'arrêt (18) disposé sur ledit boîtier cylindrique (10) pour fixer ledit élément d'actionnement (14) à sa position.

9. Mécanisme de réglage (1) selon la revendication 8, dans lequel les moyens d'actionnement (14) et/ou le premier et le second moyen d'arrêt (16, 18) sont formés d'un seul tenant avec le boîtier cylindrique (10).
